# EUROPEAN PATENT SPECIFICATION

(11) **EP 0 686 337 B1**
(45) Date of publication and mention of the grant of the patent: **21.04.1999**
(21) Application number: 94906968.6
(22) Date of filing: 23.02.1994
(51) Int. Cl.: H04Q 7/20, H04B 7/26

(54) **HANDOVER IN A DIGITAL CORDLESS TELEPHONE SYSTEM**
WEITERREICHEN IN EINEN DIGITALEN SCHNURLOSEN TELEFONSYSTEM
HANDOVER DANS UN SYSTEME TELEPHONIQUE DIGITAL SANS FIL

(30) Priority: 26.02.1993 GB 9303994
(43) Date of publication of application: 13.12.1995
(73) Proprietor: AT & T WIRELESS COMMUNICATIONS PRODUCTS LIMITED, Winchester, Hampshire S023 7BH (GB)
(72) Inventor: BEESLEY, Graham, Edgar, Winchester Hampshire SO21 2 NJ (GB)
(74) Representative: Perkins, Sarah
(86) International application number: GB9400353
(87) International publication number: WO9419913

(56) References cited:
- EP-A- 0 437 835
- EP-A- 0 504 122
- WO-A-86/06915

## Description

The present invention relates to a telecommunications system, and particularly but not exclusively to a digital time-division duplex radio communication system with a plurality of portable units and two or more base units forming a cordless telephone system.

In EP-A-0504122 a cellular telephony system is described in which handover may be requested by either the serving base station or a neighbouring base station. Whether or not to request handover is determined on the basis of signal strength and once it is decided that handover is to be performed, the conventional handover procedure is followed. Thus EP-A-0504122 describes a system which is capable of identifying when and to where handover is performed but which relies on a conventional handover procedure.

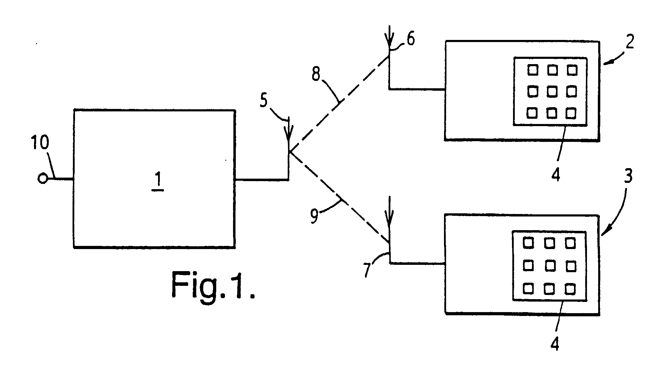

A system to which the present invention relates is shown, in a simple schematic form, in Figure 1 of the accompanying drawings to which reference will now be made. The system illustrated comprises a fixed part in the form of a base unit 1, and two portable parts in the form of respective handsets 2,3. Each handset comprises an earpiece, microphone and keypad, this latter being shown diagrammatically under reference 4. In addition, each handset contains a respective radio transmitter/ receiver (transceiver) and associated aerial 6,7 by which the handsets may communicate with the base unit by radio, as represented by the dotted lines 8,9. The base unit contains a transceiver for communicating with either one of the handsets at any one time, together with an aerial 5 for transmission and reception of radio signals from the handsets. The base unit also includes a hard-wired connection 10 to the external telephone system, and contains interface circuitry for interfacing the base unit transceiver to the external telephone line. Although only one base unit and two handsets are shown, this is to be taken as an example of the simplest system.

A more complicated system may involve a plurality of base units forming part of a network in which each base unit is able to communicate with one or more handsets. With such a system it is possible that each base unit may have hard-wired connections to the external telephone network parallel to one another. Alternatively each base unit may be connected to a central exchange (PBX) which controls the connection of the external telephone network with the base units.

Preferably, in such systems, the speech and other information to be transmitted between the or each base unit and the handsets is digitally encoded before transmission, is transmitted as a digital signal, and is decoded after reception to reproduce the original. A limited number of radio channels are allocated for the radio links 8,9 and it is clearly therefore preferable to utilise the same channel for both ends of a radio link - i.e. duplex communication. Each transceiver in the system will be able to transmit and receive on a number of these channels, if not all.

In digital second generation (CT2) cordless telephone systems, burst mode duplex is used to provide full duplex speech on a single channel. This essentially means that each transmitter has to compress the encoded speech from a particular time interval (called the burst period) down to just under half that interval (called the burst duration) in order to transmit the encoded speech and have time to receive the returning encoded speech in the other half of the burst period. This action is commonly called ping-pong transmission mode. It should be noted that the encoded speech corresponds to the speech from the entire burst period and on reception is expanded to its normal representation as continuous speech. Thus it will be seen that transmission and reception as between a base unit and a portable unit is by way of alternate transmission and reception; at any one instant of time, one end of the radio link will be transmitting, while the other receives.

There has been established a common protocol for the exchange of signals, primarily control and synchronising signals, between the fixed and portable parts of the system. In the case of CT2, this protocol, known as common air interface (CAI), is described in detail in International patent application WO90/09071. The present applicant's own air interface, a variant of the common air interface is described in European patent application 0375361.

In the existing common protocol, exchange of signals is by way of three distinct transmitted burst signal patterns or structures exchanged between the fixed and portable parts of the system. These different burst structures are known respectively as MUX3, MUX2 and MUX1, the acronym "MUX" standing for multiplex. In addition, the agreed protocol defines three sub-channels to be multiplexed within the available data bandwidth:-
i) a signalling channel (D channel);
ii) a speech channel (B channel);
iii) a burst synchronisation channel (SYN channel) containing bit and burst synchronising information.

The structure of the various multiplexes is described in detail in the above-mentioned patent applications. Briefly the arrangement of sub channels within the multiplexes is as follows:

MUX1, which is the normal speech mode, is used bi-directionally over an already-established link between a portable part and a fixed part to carry the D and B channels. There are no SYN channel bits in MUX1. MUXI supports both the 66 bit and 68 bit length burst structures defined in the protocol: MUX1.4 is 68 bits long, having 64 B bits, with 2 D bits at either end; and MUX1.2 is 66 bits long, having 64 B bits, with 1 D bit at either end. Thus, MUX1 is used exclusively for sending coded speech signals. It will be appreciated that reference to coded speech signals is reference to signals which include mainly, but not exclusively, coded speech information together with other coded signal information (D-channel).

MUX2 is used for link establishment, and for re-establishment of a previously-broken link. MUX2 comprises 34 bits in the SYN channel sandwiched between 32 bits (16 at each end) in the D channel - i.e. 66 bits long. There are no B channel bits in MUX2.

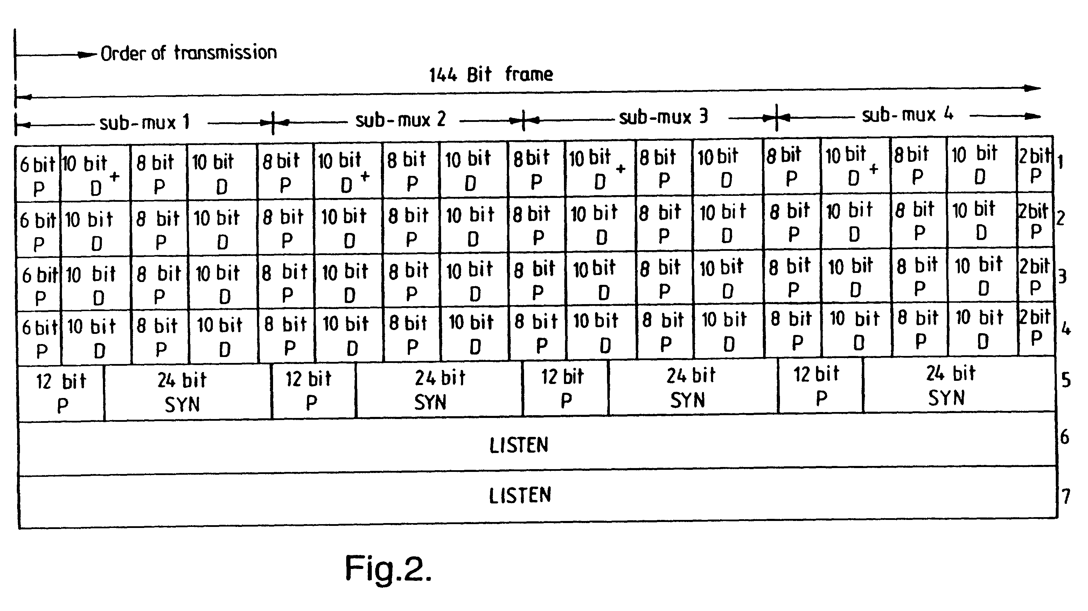

MUX3 is used for link establishment and re-establishment in the direction portable part to fixed part only. A representation of MUX3 is shown in Figure 2 and will be seen to comprise seven frames, numbered 1 to 7 down the right-hand side, each 144 bits long. The first four frames, 1 to 4, contain D-channel bits, and comprise 20 bit D-channel words each split into two 10-bit sections surrounded by preamble (P) bits. The fifth frame comprises 24 SYN channel bits surrounded by 24 preamble (P) bits (12 at each end). During frames 6 and 7, the transceiver in the portable part listens for a response from a fixed part.

The MUX3 transmission is thus a 10 ms transmit followed by a 4 ms receive and, in practice, this is repeated for a period of at least 750 ms, or until a link is established.

In a CT2 system comprising a handset and two or more base units, movement of the user of the handset from the vicinity of the base unit with which he is in contact to the vicinity of another base unit may weaken the signal quality to an extent where it is preferable for reliable communication to change the base unit with which he is in contact to the nearest unit. The action necessary to cause such a change is called a handover.

Handover can be initiated either before or after a link has failed. In general handover involves synchronising the new base unit to the transmission from the handset and the handset synchronising to the base unit transmission.

The existing procedure for this is as follows:
1. The handset either is commanded by the current base unit or makes a local decision to re-establish the link. this will normally be in MUX1 (speech mode) and will cause the suspension of speech mode.
2. The handset transmits in MUX3 (callout) on the existing channel, or possibly on a different channel if so commanded.
3. The new base unit receives the MUX3 transmission from the handset and sends a reply transmission back to it in MUX2.
4. The handset receives the MUX2 transmission from the new base unit and responds with the corresponding MUX2 transmission.
5. The new base unit receives the MUX2 transmission from the handset and commands a change to MUX1. The new base unit starts receiving in MUX1.
6. The handset receives the command in MUX2 and changes to MUX1 transmission and reception.
7. The new base unit receives the MUX1 and commands the recommencement of speech mode.

This standard form of re-establishment/ handover is in the manner of an outgoing call (handset originated) in that from step 2 it is the same as an outgoing call.

A slightly faster form of re-establishment/ handover known as synchronous re-establishment skips over steps 2 and 3 by allowing the current base unit to commence the callout. This is a re-establishment in the manner of an incoming call (base unit originated call).

Either of the above re-establishment/handover techniques involve a temporary suspension of the speech path and this is perceived as a disruption. It is therefore considered that handover prior to actual loss of speech (which may not actually be a just cause to re-establish) is to be used with caution since it will create its own disruption when in fact there may have been no actual loss of speech had the handover not been commanded.

The present invention relates to a handover technique for use in a network of base units which causes no or minimal loss of speech.

According to the invention in a first aspect there is provided a telecommunications system for transmitting and receiving radio signals between one or more portable units and a plurality of base units, each of said base units including a receiver for receiving coded speech signals transmitted by a portable unit, the system further including a controller for determining whether handover of communication with the portable unit from a first base unit, presently in communication with the portable unit, to a further base unit is to be performed, characterised by the system further including a common external clock in communication with each of the base units thereby approximately synchronising the base units with each other; and each base unit further including timing means in communication with the external clock for generating a timing signal representing an expected time of reception of coded speech signals, and coded speech signal synchronisation means, connected to the timing means and to the receiver for synchronising the base unit with the coded speech signals received, whereby said system is operable to perform handover without substantial interruption of the reception and transmission of coded speech signals between the portable unit and the base units.

With the present invention the process for handover is transparent to the handset which receives no commands and remains in MUX1 (speech mode operation) throughout. Ideally there is no requirement for muting.

In a preferred embodiment of the present invention the telecommunications system is a digital time-division duplex radio communication system. Ideally, the telecommunications system is a second generation cordless telephone system (CT2) utilising the common air interface (CAI) protocol or a variant thereof.

The telecommunications system includes a common external clock which is connected to each of the base units in the system so that all of the base units are approximately in synchronism with each other. In this way the coded speech signal synchronisation means may be simplified and may utilise the approximate synchronisation of the base units to estimate when the coded speech signals from the portable unit are likely to be received. This can be achieved by the synchronisation means including switch means which are actuated to input into the synchronisation means a preset pulse from a bit counter connected to the common external clock. The preset pulse represents a predetermined expected time, within each transmission/reception frame, of reception of the coded speech signals.

The telecommunications system may further include adjusting means for adjusting the synchronisation of the base unit. The adjusting means may be in the form of a fine timing shift register and an associated switch device which may be actuated to output signals from any one of a plurality of locations in the shift register.

Moreover, the system may further include decoding means for decoding the coded speech signals received and determining whether the base unit is in frame synchronisation with the coded speech signals by the success or failure of the decoding. Preferably, the decoding means decodes the D-channel bits in the coded speech signals received.

The base units may also include quality determining means for determining the quality of the coded speech signals received. The quality determining means may be connected to the decoding means in which case the quality of the received signals may be determined by the success or failure of the decoding of the data information.

In a further aspect the present invention provides a method of handover of communication with a portable unit in a telecommunications system from a first base unit, presently in communication with the portable unit, to a further base unit, said method comprising
each of one or more further base units receiving coded speech signals transmitted by the portable unit to the first base unit by means of a receiver;
approximately synchronising each of the base units with each other by means of a common external clock;
generating a timing signal for each further base unit which represents an expected time of reception of coded speech signals by means of timing means;
synchronising said further base units with coded speech signals received by means of coded speech signal synchronisation means;
determining whether handover from the first base unit to one of the one or more further base units is to be performed; and if so determined handing over communication with the portable unit to one of the one or more further base units without substantial interruption of the reception and transmission of coded speech signals between the portable unit and the base units.

Each of the base units is approximately synchronised with every other base unit by inputting a common external clock signal. Moreover, each of the one or more further base units may synchronise with the coded speech signals received by firstly estimating an expected time, in each transmission/reception frame, of when the coded speech signals will be received. This estimation may be performed by generating a preset pulse from a bit counter connected to the external common clock which is input into a bit counter of coded speech signal synchronisation means provided in each base unit.

Moreover, the method recited above may further include adjusting the synchronisation of each of the further base units, if synchronisation with the coded speech signals is not immediately achieved. To determine whether any one of the further base units is synchronised with the coded speech signals received, the coded speech signals received may be decoded and the success or failure of the decoding utilised as a measure of whether synchronisation has been achieved and as a measure of the quality of the signals received.

An embodiment of the present invention will now be described by way of example only with reference to the accompanying drawings, in which
Figure 1 illustrates a conventional time-division duplex radio communication system in its simplest form;
Figure 2 illustrates the information exchanged in the conventional MUX3 structure; and
Figure 3 is a block diagram of a single base unit 1 and a central controller 11 in accordance with the present invention.

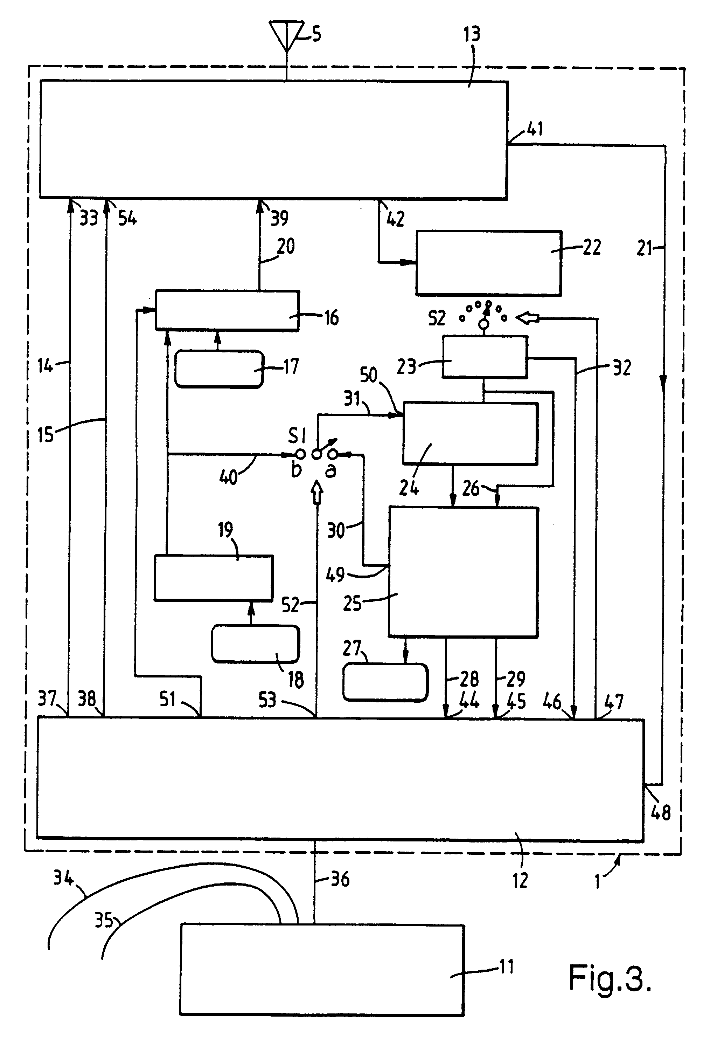

With reference to Figure 3, the control functions of the system are shared between a central controller 11 which is common to all the base units on the telecommunications system and a local controller 12 provided within each base unit. To this end, the local controllers of each of the base units on the system are connected, by means of hard-wired connections 34,35,36 to the central controller 11; for simplicity, only a single base unit is shown. The local controller 12 is basically a microprocessor which controls the local functions of the particular base unit 1. For example, the local controller 12 controls the transceiver 13 within the base unit from a channel select out terminal 37 via a channel select line 14 to a channel select in terminal 33, and a transmit enable terminal 38 via a transmit enable line 15.

When transmitting in MUX1, the local controller 12 generates control data (D channel) which is output from the control data out terminal 51 and multiplexed in a transmit multiplexer 16 with speech (B channel) from conventional speech circuitry 17. The multiplexer 16 is clocked from an external 500 Hz clock 18 which is passed via a transmit bit counter 19 to the clock input of the multiplexer. The external clock 18 is also connected to all the other base units 1 so that all of the base units 1 in the system are approximately synchronised together. The counter 19, by counting the bits from a preset start of a word, keeps a tally of the bits within each word and thus enables the system to keep track of the intended function of each bit. The output from the multiplexer 16 in the form of coded speech signals is passed via a line 20 to the transmit data in terminal 39 of the transceiver 13. The output from the transmit bit counter 19 is also used to generate a preset pulse which is passed via a line 40 to a handover/normal select switch S1, the function of which will be described in greater detail later.

The transceiver 13 has two outputs which concern the handover procedure: the RSSI out terminal 41 which outputs the RSSI signal which is passed directly via line 21 to the RSSI in terminal 48 of the local controller 12; and the receive data out terminal 42 which outputs the receive data signal which is passed to a shift register 22 for fine timing. The RSSI signal, which is generated in a known manner, is indicative of received signal strength and is intended to enable the local controller 12 to judge whether the received signal strength is sufficient. The receive data signal is the received digital data signal and contains, during MUX1, D and B channel data.

Timing of the incoming data is adjusted by selection of one of the several outputs from the shift register 22. The outputs are available in small increments of a bit and cover a range of more than one bit. The multi-position selector S2, controlled from the fine timing select output terminal 47 of the local controller 12 is used to select the time adjusted output which is fed to a bit synchronising circuit 23.

A bit quality output is taken direct on line 32 from the bit synchronising circuit 23 to the bit quality in terminal 46 of the local controller 12. The bit synchronising circuit 23 also receives pulses from a receive bit counter 24 which has, on receive, the same function as the transmit bit counter 19; in other words to tell the bit synchronising circuit what the functions of the individual data bits are. During normal use this is set up in MUX2 during call set-up.

The output from the receive bit counter 24 is passed to a receive demultiplexer 25 which receives the signal output from the bit synchronising circuit 23 on line 26 and demultiplexes the received signal into the speech component, which is passed to conventional speech circuitry 27, and control data, which is passed on line 28 to the control data in terminal 44 of the local controller 12. The demultiplexer 25 also generates a word quality signal which is passed on line 29 to the word quality in terminal 45 of the local controller 12 and this, together with the bit quality signal make up a received signal quality indication which, together with the received signal strength indication, is used by local controller 12 to decide on whether a handover can be performed.

The receive demultiplexer 25 also generates a synchronising signal which is used, by feeding back to the receive bit counter 24, to preset or initialise the bit counter 24 when a frame sync is first detected. Thus, in the "normal" position a of switch S1, the receive sync out terminal 49 of the demultiplexer 25 is connected via lines 30 and 31 to the preset terminal 50 of the receive bit counter 24.

When a potential new base unit is instructed by the central controller 11 to attempt to synchronise with the coded speech signals transmitted by a portable unit, the local controller 12 instructs the switch S1 via line 52 from handover/ normal select terminal 53 to switch over to the "handover" position b of switch S1, whereupon the preset terminal 50 of the receive bit counter 24 receives a timing signal in the form of a preset pulse directly from the transmit bit counter 19. The preset pulse, which passes along lines 40 and 31 to the preset terminal 50, is a pulse which is transmitted once a frame and indicates to the receive bit counter 24 when to expect the first bit of the coded speech signals transmitted by a portable unit each frame. The timing of the generation of the preset pulse is pre-determined but may be re-programmed if it is found to be consistently inaccurate. Hence, the timing of the preset pulse is determined partially through a prediction of the timing of the system and partly through an historical analysis of the performance of the system during handover. The preset pulse is an a priori estimate of the timing as between the base unit's transmitter, and the actual received data. By this means a potential new base unit may synchronise to the received MUX1 transmission from the portable unit, even in the absence of a SYN channel. The use of the preset pulse from the transmit bit counter 19 relies on all of the base units in the system being approximately synchronised. This is achieved by means of the external clock 18 which is connected to all of the base units.

When a base unit is instructed by the central controller 11 to attempt synchronisation, the transmit enable input terminal 54 of the transceiver 13 may be disabled so as to prevent any transmission from the base unit until either the central controller 11 signals that the base unit is to accept handover or it is to cease attempting synchronisation.

An example of the procedure which is adopted when using the telecommunications system described above is as follows:
1. The base unit presently in communication with a portable unit reports to the central controller 11 the weakening of the quality of reception (this will usually be a weak signal amplitude but may be rising interference). There are several signal quality indicators which may be relied upon, for example signal strength, signal to noise ratio and the concomitant of signal to noise ratio, bit error rate and bit timing jitter which correspond to amplitude and phase uncertainty.
2. The central controller 11 commands other base units which may be appropriate to handover to receive on the channel being used.
3. A base unit so commanded tunes to the channel and aligns its reception window for the most probable (a priori) reception time. This is done by ensuring that the base units are all approximately in synchronisation with one another by means of the common external clock 18, for instance. It will be understood that reference to the base units being in synchronisation with each other is reference to the start time of each frame (as defined by any communication between a portable unit and a base unit belonging to the system) being common to all base units belonging to the system. With all of the base units in approximate synchronisation with one another, each base unit aligns its reception window by inputting a preset pulse from the transmit bit counter 19 into the receive bit counter 24. The preset pulse is a best estimate of the expected time within each frame of reception of the coded speech signals from the portable unit. The preset pulse is pre-programmed into the base unit and the bit counter 24 treats the input of the preset pulse as a marker for the first bit of coded speech signals from the portable unit.
4. The new base unit bit synchronises to the MUXI transmission of the portable unit.
5. The new base unit attempts to decode codewords being transmitted by the portable unit or handset. For instance, when the handset is transmitting in MUX1.2 or MUX1.4 the base unit attempts to decode the 1 or 2 D channel bits at either end of the B channel speech bits. Decoding means may be provided which determines after the base unit has received a number of transmission bursts from the portable unit, if the base unit is in frame synchronisation with the MUX1 transmission. This may be done, for instance, by identification of the cycling redundancy check bits in the D-channel of the transmissions.
6. If
   a) it is determined that the new base unit has been successful in achieving frame synchronisation with the transmissions from the portable unit then the base unit passes onto step 7; otherwise
   b) if it is determined that the new base unit is not in frame synchronisation with the transmissions from the portable unit, which may be as a result of a poor quality signal, the base unit may either report failure in step 7 to the central controller 11 or in a more comprehensive scheme it may either by local decision or by central command re-try one or more times with a different timing preferably almost 1 bit sooner or later than the initial timing. This is done by the local controller 12 sending a signal to the multiple selector S2 to select a different output from the shift register 22. This has the effect of moving the expected reception of the code speech signals in each frame backwards or forwards by a small amount. Usually a shift of just under 1 bit either forwards or backwards will be sufficient to establish frame synchronisation. The base unit then repeats step 5.
7. The central controller 11 receives the results from one or more potential new base units on the success or failure of frame synchronisation and also on the resulting signal quality.

If no better base unit than the present base unit is available for communication with the portable unit then the original link is left unperturbed.

If a better base unit than the present base unit is available then the speech and data being received from this new base unit is substituted for that received by the present base unit and the speech and data signals being transmitted by the original are applied to the new base unit. When the new base unit has successfully adjusted to the speech and data pattern (adaptive codecs take a short while to adapt to the speech signal) it is commanded to transmit and the current base unit is commanded to cease transmission. Optimally this change of transmission source for the handset is on a pre-arranged timing signal such as a codeword.

The important aspect of this embodiment is that frame synchronisation is attempted with MUX1 transmissions which have no per frame synchronisation pattern unlike MUX2.

Also, the mechanism for attempting synchronisation is the trial and error decoding of the codewords in the D channel which are regularly transmitted but are a very slow structure occupying 20 or 40 frames and which may take as long as 100 frames to synchronise to.

Ideally, having synchronised a signal quality estimate is the next step and when it is decided to handover then the speech (and data) from the new base unit (which has been receiving the identical transmission to the original base unit) is substituted in the speech path and the codec and transmitter of the new base unit is "trained" to the speech and data intended for the handset (and currently still being transmitted by the original base unit) prior to actually starting transmission.

Some features which are not critical but of interest are:

Firstly, if the new base unit is receiving a much bigger signal than the original base unit then the handset would receive a much bigger signal from the new base unit and therefore due to capture effect in the handsets receiver it is not very critical when the transmitter of the original base unit is turned off provided it is shortly after the new base unit has started transmitting.

Secondly, the speech and data from the new base unit may be substituted any reasonable time after it has been "trained" so that the exact time of changeover can be suited to the PBX/central controller's requirements.

Thirdly, the decision to test the suitability of available base units for handover can be made as frequently as required since there is no detriment to handover and there may be some gain available. In this sense it can be seen as a form of diversity reception.

Fourthly, even without handover the use of several base units to report on the signal level from a given handset may be used as the basis of a basic location and tracking system and may be used to enhance the decision making process about best base unit and any pre-emptive handover.

Fifthly, the refinements described about retrying (step 6b) above with different timings may be unimportant if the nominal set-up is accurate or be made unimportant by learning the best setting either locally based on the best timings or centrally based on commanded re-tries.

References to standard re-establishment and synchronous re-establishment are in the Interim European Telecommunication Standard No. I-ETS 300 131 R1 in sections 5.4.4 through to 5.4.6.

It is, of course, understood that the telecommunications system need not utilise the common air interface or be a time-division duplex system and instead different protocols for communication may be used. However, in all cases with the present invention handover is achieved without substantial interruption of the reception and transmission of coded speech signals, since the potential base unit or base units synchronise before handover with the coded speech signals which do not contain any synchronisation signals and instead comprise substantially of speech information with some data information and check bits.

In addition, reference is made to the provision of a central controller in the system. As an alternative, the local controller in each base unit may perform the functions of the central controller. In which case it is preferred that the local controller of the base unit presently in communication with the handset or portable unit decides whether handover is to be performed and seeks information from the local controllers of the further base units whether a suitable replacement, in frame synchronisation, is available.

Also, reference is made to an external common clock 18 this is a preferred embodiment and alternative arrangements are envisaged. In order to ensure that each of the base units is approximately synchronised with every other base unit all that is needed is for a clock signal to be made available at each base unit. Hence, one of the base units may include clock means, signals from which are supplied to all other base units. Also, the clock signals need not be supplied by hardwiring between the base units and a common clock instead clock signals may be transmitted.

Furthermore, it is not essential for any measurement or determination of signal quality or strength. Instead, with simple systems, handover may be automatic in response to pre-determined spatial boundaries, for example. In such situations, ideally, all base units not in use continually seek frame synchronisation with transmitted coded speech signals. Moreover, different methods of synchronisation with the received coded speech signals may be performed. For example, the further base units need not utilise approximate synchronisation between base units and instead may search across the whole of the reception window for the coded speech signals.

Further alternative arrangements of telecommunications systems and methods for handover are envisaged subject to the present invention as claimed in the claims appended hereto.

## Claims

1. A telecommunications system for transmitting and receiving radio signals between one or more portable units (2,3) and a plurality of base units (1), each of said base units including a receiver (13) for receiving coded speech signals transmitted by a portable unit, the system further including a controller (11) for determining whether handover of communication with the portable unit from a first base unit, presently in communication with the portable unit, to a further base unit is to be performed,
characterised by the system further including a common external clock (18) in communication with each of the base units thereby approximately synchronising the base units with each other; and each base unit further including timing means (19,S1,24,25) in communication with the external clock (18) for generating a timing signal representing an expected time of reception of coded speech signals, and coded speech signal synchronisation means (12,22,23,S2), connected to the timing means (19,S1,24,25) and to the receiver (13) for synchronising the base unit with the coded speech signals received, whereby said system is operable to perform handover without substantial interruption of the reception and transmission of coded speech signals between the portable unit (2,3) and the base units (1).

2. A telecommunications system as claimed in claim 1, wherein the timing signal is a preset pulse generated by a bit counter (19) connected to the common external clock (18).

3. A telecommunications system as claimed in claim 2, wherein the timing means (19,S1,24,25) includes a switch (S1) connected to the bit counter (19) and a further bit counter (24) so that during synchronisation the switch (S1) is actuated to connect the bit counter (19) to the further bit counter (24) and thereby input the preset pulse into the further bit counter.

4. A telecommunications system as claimed in any one of the preceding claims, wherein the coded speech signal synchronisation means (12,22,23,S2) includes adjusting means (12,22,S2) for altering the reception timing of the base unit to improve synchronisation of the base unit with the coded speech signals received.

5. A telecommunications system as claimed in claim 4, wherein the adjusting means (12,22,S2) comprises a shift register (22) and switch device (S2) for switching between different locations of the shift register.

6. A telecommunications system as claimed in any one of claims 1 to 3 and 5, wherein the shift register (22) is a fine timing shift register defining different locations separated by less than one bit.

7. A telecommunications system as claimed in any one of the preceding claims, wherein the coded speech signal synchronisation means further includes decoding means for decoding coded speech signals received.

8. A telecommunications system as claimed in claim 7, wherein the decoding means includes a data information identification device for identifying and separating data information from speech information in the coded speech signals received.

9. A telecommunications system as claimed in any one of the preceding claims, wherein each base unit also includes quality determining means for determining the quality of the coded speech signals received.

10. A telecommunications system as claimed in claims 8 and 9, wherein the quality determining means is connected to the decoding means and determines the quality of the coded speech signals received in dependence on the success or failure of the decoding of the data information.

11. A telecommunications system as claimed in either of claims 9 or 10, wherein each base unit further includes signal amplitude detecting means, connected to the quality determining means, for detecting the amplitudes of the coded speech signals and inputting the detected amplitudes into the quality determining means for use in determining the quality of the coded speech signals.

12. A telecommunications system as claimed in any one of the preceding claims, wherein the controller is a separate central controller connected to each of the base units.

13. A telecommunications system as claimed in any one of the preceding claims, wherein the system is a digital time-division duplex radio communications system.

14. A telecommunications system as claimed in claim 13, wherein the system is a second generation cordless telephone system utilising the common air interface protocol.

15. A method of handover of communication with a portable unit (2,3) in a telecommunications system from a first base unit (1), presently in communication with the portable unit, to a further base unit(1), said method comprising
each of one or more further base units receiving coded speech signals transmitted by the portable unit to the first base unit by means of a receiver (13);
approximately synchronising each of the base units with each other by means of a common external clock (18);
generating a timing signal for each further base unit which represents an expected time of reception of coded speech signals by means of timing means (19,S1,24,25);
synchronising said further base units with coded speech signals received by means of coded speech signal synchronisation means (12,22,23,S2);
determining whether handover from the first base unit to one of the one or more further base units is to be performed; and if so determined handing over communication with the portable unit to one of the one or more further base units without substantial interruption of the reception and transmission of coded speech signals between the portable unit and the base units.

16. A method of handover as claimed in claim 15, wherein said timing signal is a preset pulse generated by a bit counter (19) connected to the common external clock.

17. A method of handover as claimed in claim 16, further including inputting said preset pulse into a further bit counter (24) to preset the further bit counter to an expected time of reception of coded speech signals.

18. A method of handover as claimed in any one of claims 15 to 17, further including adjusting the timing of the further base units to improve synchronisation with the coded speech signals.

19. A method of handover as claimed in any one of claims 15 to 18, further including decoding coded speech signals received.

20. A method of handover as claimed in claim 19, wherein the coded speech signals received are decoded by identifying and separating data information from the speech information in the coded speech signals received.

21. A method of handover as claimed in any one of claims 15 to 19, further including determining the quality of the coded speech signals received.

22. A method of handover as claimed in claims 19 or 20 and 21, wherein the quality of the coded speech signals received is determined by the success or failure of the decoding of the data information.

23. A method of handover as claimed in claim 22, wherein whether handover is to be performed is determined in dependence on the quality of the coded speech signals received.

24. A method of handover as claimed in claim 23, wherein handover is performed when the quality of the coded speech signals received by one of the one or more further base units is better than the quality of the coded speech signals received by the first base unit.

25. A method of handover as claimed in any one of claims 15 to 23, further including training one of the one or more further base units to the speech and data transmitted by the portable unit after a decision to handover has been made but before handover takes place.

## Patentansprüche

1. Telekommunikationssystem zum Senden und Empfangen von Funksignalen zwischen einem oder mehreren tragbaren Gerät(en) (2,3) und einer Vielheit von Basisgeräten (1), und jedes der genannten Basisgeräte einen Empfänger (13) für den Empfang codierter Sprachsignale einbezieht, die von einem tragbaren Gerät gesendet werden, das System weiter ein Steuergerät (11) für das Bestimmen einbezieht ob Weiterreichen von Kommunikation mit dem tragbaren Gerät ab einem ersten Basisgerät, das gegenwärtig mit dem tragbaren Gerät kommuniziert, an ein weiteres Basisgerät ausgeführt werden soll, dadurch gekennzeichnet, daß das System weiter einen gemeinsamen, externen Taktgeber (18) in Kommunikation mit jedem der Basisgeräte einbezieht und dadurch die Basisgeräte annähernd miteinander synchronisiert; und jedes Basisgerät weiter Timing-Mittel (190,S1,24,25) in Kommunikation mit dem externen Taktgeber (18) zum Generieren eines Timing-Signals einbezieht, das eine erwartete Empfangszeit der codierten Sprachsignale repräsentiert, und codierte SprachsignalSynchronisiermittel (12,22,23,S2) einbezieht, die mit den Timing-Mitteln (19,S1,24,25) und mit dem Empfänger (13) zum Synchronisieren des Basisgeräts mit den empfangenen codierten Sprachsignalen verbunden sind, wodurch genanntes System funktionsfähig ist Weiterreichen ohne erhebliche Störung des Empfangs und der Übertragung codierter Sprachsignale zwischen dem tragbaren Gerät (2,3) und dem Basisgerät (1) auszuführen.

2. Telekommunikationssystem nach Anspruch 1, worin das Timing-Signal ein voreingestellter Impuls ist, der von einem, an den gemeinsamen, externen Taktgeber (18)angeschlossenen, Bitzähler (19) generiert wird.

3. Telekommunikationssystem nach Anspruch 2, worin das Timing-Mittel (19,S1,24,25) einen Schalter (S1) einbezieht, der mit dem Bitzähler (19) verbunden ist und einen weiteren Bitzähler (24), so daß während Synchronisieren der Schalter (S1) betätigt wird, um den Bitzähler (19) mit dem weiteren Bitzähler (24) zu verbinden und dadurch den voreingestellten Impuls in den weiteren Bitzähler einzugeben.

4. Telekommunikationssystem nach einem der vorhergehenden Ansprüche , worin das codierte Sprachdsignal-Synchronisationsmittel (12,22,23,S2) Einstellmittel (12,22,S2) zum Ändern des Empfangs-Timing des Basisgeräts einbezieht, um die Synchronisation des Basisgeräts mit den empfangenen codierten Sprachsignalen zu verbessern.

5. Telekommunikationssystem nach Anspruch 4, worin das Einstellmittel (12,22,S2) ein Schieberegister (22) und einen Schalter (S2) zum Schalten zwischen verschiedenen Punkten des Schieberegisters einbezieht.

6. Telekommunikationssystem nach einem der vorhergehenden Ansprüche 1 bis 3 und 5, worin ein Schieberegister (22) ein Feinabstimmungsschieberegister ist, daß verschiedene Punkte, die durch weniger als ein Bit getrennt sind, definiert.

7. Telekommunikationssystem nach einem der vorhergehenden Ansprüche, worin das Synchronisiermittel für codierte Sprachsignale weiter Decodiermittel zum Decodieren der empfangenen codierten Sprachsignale einbezieht.

8. Telekommunikationssystem nach Anspruch 7, worin das Decodiermittel eine Dateninformations-ldentifiziervorrichtung zum Identifizieren und Trennen von Dateninformation von Sprachinformation in den empfangenen, codierten Sprachsignalen einbezieht.

9. Telekommunikationssystem nach einem der vorhergehenden Ansprüche, worin jedes Basisgerät außerdem Qualitätsbestimmungsmittel zum Bestimmen der Qualität der empfangenen, codierten Sprachsignale einbezieht.

10. Telekommunikationssystem nach Ansprüchen 8 und 9, worin das Qualitätsbestimmungsmittel mit dem Decodiermittel verbunden ist und die Qualität der empfangenen, codierten Sprachsignale in Abhängigkeit vom Erfolg oder Versagen der Decodierung der Dateninformation bestimmt.

11. Telekommunikationssystem nach entweder Anspruch 9 oder 10, worin jedes Basisgerät weiter Signalamplitudenerkennungsmittel einbezieht, die mit dem Qualitätsbestimmungsmittel, zum Erkennen der Amplituden der codierten Sprachsignale und Eingabe der erkannten Amplituden in das Qualitätsbestimmungsmittel zur Verwendung beim Bestimmen der Qualität der codierten Sprachsignale, verbunden sind.

12. Telekommunikationssystem nach einem der vorhergehenden Ansprüche, worin das Steuergerät ein separates zentrales Steuergerät ist, das mit jedem der Basisgeräte verbunden ist.

13. Telekommunikationssystem nach einem der vorhergehenden Ansprüche, worin das System ein Zeitgetrenntlage-Duplexfunksystem ist.

14. Telekommunikationssystem nach Anspruch 13, worin das System ein schnurloses Telefonsystem der zweiten Generation ist und das übliche Luftschn ittstellenprotokoll verwendet.

15. Weiterreichmethode der Kommunikation mit einem tragbaren Gerät (2,3) in einem Telekommunikationssystem ab einem ersten Basisgerät (1), das gegenwärtig mit dem tragbaren Gerät kommuniziert, an ein weiteres Basisgerät (1), genannte Methode umfassend
jedes von einem oder mehreren weiteren Basisgeräten, die codierte Sprachsignale durch einen Empfänger (13) empfangen, die vom tragbaren Gerät an das erste Basisgerät gesendet werden;
annäherndes Synchronisieren jedes der Basisgeräte durch einen gemeinsamen, externen Taktgeber (18);
Generieren eines Timing-Signals für jedes weitere Basisgerät, das eine erwartete Zeit des Empfangs codierter Sprachsignale repräsentiert, durch Timing-Mittel (19,S1,24,25);
Synchronisieren genannter weiteren Basisgeräte mit empfangenen, codierten Sprachsignalen durch codierte Sprachsignalsynchronisiermittel (12,22,23,S2);
Bestimmen ob Weiterreichen ab dem ersten Basisgerät an eins von einem oder mehreren der weiteren Basisgeräten ausgeführt werden soll; und falls so entschieden, Weiterreichen der Kommunikation mit dem tragbaren Gerät an eins von einem oder der mehreren weiteren Basisgeräten ohne erhebliche Störung des Empfangs oder der Übertragung codierter Sprachsignale zwischen dem tragbaren Gerät und den Basisgeräten.

16. Weiterreichmethode nach Anspruch 15, worin genanntes Timing-Signal ein voreingestellter Impuls ist, der von einem Bitzähler (19) generiert wird, der mit dem gemeinsamen, externen Taktgeber (18) verbunden ist.

17. Weiterreichmethode nach Anspruch 16, die weiter das Eingeben des genannten voreingestellten Impulses in einen weiteren Bitzähler (24) einbezieht, um den weiteren Bitzähler auf eine erwartete Empfangszeit codierter Sprachsignale voreinzustellen.

18. Weiterreichmethode nach einem der Ansprüche 15 bis 17, die weiter das Einstellen des Timings der weiteren Basisgeräte einbezieht, um Synchronisation mit den codierten Sprachsignalen zu verbessern.

19. Weiterreichmethode nach einem der Ansprüche 15 bis 18, die weiter das Decodieren empfangener, codierter Sprachsignale einbezieht.

20. Weiterreichmethode nach Anspruch 19, worin die empfangenen, codierten Sprachsignale durch Identifizieren und Trennen von Dateninformation von der Sprachinformation in den empfangenen, codierten Sprachsignalen decodiert werden.

21. Weiterreichmethode nach einem der Ansprüche 15 bis 19, die weiter das Bestimmen der Qualität der empfangenen, codierten Sprachsignale einbezieht.

22. Weiterreichmethode nach Ansprüchen 19 oder 20 und 21, worin die Qualität der empfangenen, codierten Sprachsignale durch den Erfolg oder das Versagen der Decodierung der Dateninformation bestimmt wird.

23. Weiterreichmethode nach Anspruch 22, worin ob Weiterreichen ausgeführt werden soll, in Abhängigkeit von der Qualität der empfangenen codierten Sprachsignale bestimmt wird.

24. Weiterreichmethode nach Anspruch 23, worin Weiterreichen ausgeführt wird, wenn die Qualität der codierten Sprachsignale, die von einem der einen oder mehreren weiteren Basisgeräte empfangen werden, besser ist als die Qualität der codierten Sprachsignale, die vom ersten Basisgerät empfangenen werden.

25. Weiterreichmethode nach einem der Ansprüche 15 bis 23, die weiter das "Trainieren" des einen oder der mehreren weiteren Basisgeräte auf die Sprache und Daten einbezieht, die vom tragbaren Gerät gesendet werden nach dem eine Entscheidung weiterzureichen getroffen worden ist, aber bevor Weiterreichen stattfindet.

## Revendications

1. Un système de télécommunications servant à émettre et à recevoir des signaux radio entre une ou plusieurs unités portables (2, 3) et une série d'unités de base (1), chacune desdites unités de base comportant un récepteur (13) servant à recevoir les signaux vocaux codés émis par une unité portable, le système comportant en outre un contrôleur (11) servant à établir s'il est nécessaire de lancer une opération de relais depuis une première unité de base en communication avec l'unité portable et vers une deuxième unité de base, caractérisé par le fait que le système comporte en outre une horloge externe commune (18) en communication avec chacune des unités de base et servant à synchroniser approximativement les unités de base entre elles, chaque unité de base comportant en outre un dispositif de chronométrage (19, S1, 24, 25) en communication avec l'horloge externe (18) et servant à produire un signal de chronométrage représentant l'horaire prévu de réception des signaux vocaux codés, et un dispositif de synchronisation des signaux vocaux codés (12, 22, 23, S2) raccordé au dispositif de chronométrage (19, S1, 24, 25) et au récepteur (13) et servant à synchroniser l'unité de base avec les signaux vocaux codés reçus, ledit système pouvant effectuer des opérations de relais d'une unité de base vers une autre sans interruption majeure de la réception et de l'émission des signaux vocaux codés échangés entre l'unité portable (2,3) et le unités de base (1).

2. Un système de télécommunications ainsi revendiqué à la revendication 1, dans lequel le signal de chronométrage est une impulsion prédéterminée produite par un compteur de bits (19) raccordé à l'horloge externe commune (18).

3. Un système de télécommunications ainsi revendiqué à la revendication 2, dans lequel le dispositif de chronométrage (19, S1, 24, 25) comporte un commutateur (S1) raccordé au compteur de bits (19) et un second compteur de bits (24) en sorte que pendant l'opération de synchronisation le commutateur (S1) est activé pour raccorder le compteur de bits (19) au second compteur de bits (24), afin de faire passer l'impulsion prédéterminée dans le second compteur de bits.

4. Un système de télécommunications ainsi revendiqué à l'une des revendications précédentes, dans lequel le dispositif de synchronisation des signaux vocaux codés (12, 22, 23, S2) comporte un dispositif de réglage (12, 22, S2) destiné à modifier le chronométrage de la réception de l'unité de base afin d'améliorer la synchronisation de l'unité de base avec les signaux vocaux codés reçus.

5. Un système de télécommunications ainsi revendiqué à la revendication 4, dans lequel le dispositif de réglage (12, 22, S2) comporte un registre à décalage (22) et un appareil de commutation (S2) permettant de commuter entre plusieurs positions du registre à décalage.

6. Un système de télécommunications ainsi revendiqué à l'une des revendication 1 à 3 ou à la revendication 5, dans lequel le registre à décalage (22) est un registre à décalage à chronométrage de précision définissant plusieurs positions espacées par moins d'un bit.

7. Un système de télécommunications ainsi revendiqué à l'une quelconque des revendications précédentes, dans lequel le dispositif de synchronisation des signaux vocaux codés comporte en outre un dispositif de décodage servant à décoder les signaux vocaux codés reçus.

8. Un système de télécommunications ainsi revendiqué à la revendication 7, dans lequel le dispositif de décodage comporte un dispositif d'identification des données servant à identifier et à séparer les signaux vocaux des autres données dans les signaux codés reçus.

9. Un système de télécommunications ainsi revendiqué à l'une quelconque des revendications précédentes, dans lequel chaque unité de base comporte également un dispositif d'évaluation de la qualité servant à évaluer la qualité des signaux vocaux codés reçus.

10. Un système de télécommunications ainsi revendiqué à l'une des revendications 8 et 9, dans lequel le dispositif d'évaluation de la qualité est raccordé au dispositif de décodage et évalue la qualité des signaux vocaux codés reçus en fonction du succès ou de l'échec du décodage des données non-vocales.

11. Un système de télécommunications ainsi revendiqué à l'une des revendications 9 et 10, dans lequel chaque unité de base comporte en outre un dispositif de détection de l'amplitude des signaux, raccordé au dispositif d'évaluation de la qualité, servant à mesurer l'amplitude des signaux vocaux codés et transmettant les amplitudes mesurées au dispositif d'évaluation de la qualité qui se sert de ce paramètre pour évaluer la qualité des signaux reçus.

12. Un système de télécommunications ainsi revendiqué à l'une quelconque des revendications précédentes, dans lequel le contrôleur est un contrôleur central raccordé à toutes les unités de base.

13. Un système de télécommunications ainsi revendiqué à l'une quelconque des revendications précédentes, dans lequel le système est un système de communication par radio en duplex et à répartition dans le temps.

14. Un système de télécommunications ainsi revendiqué à la revendication 13, dans lequel le système est un système de téléphonie sans fil de la deuxième génération utilisant le protocole d'interface aérienne commune (CAI en anglais).

15. Une méthode de relais de communication pour une unité portable (2,3) en communication dans un système de télécommunications avec une première unité de base (1), le relais se faisant depuis ladite première unité de base (1) vers une seconde unité de base (1), ladite méthode comprenant les étapes suivantes:
réception par chacune des unités de base, grâce à un récepteur (13), des signaux vocaux codés transmis par l'élément portable à la première unité de base;
synchronisation approximative de chacune des unités de base avec les autres unités de base grâce à une horloge externe commune (18);
génération d'un signal d'horloge par un dispositif de chronométrage (19,S1,24,25) pour chaque unité de base supplémentaire, ce signal correspondant à l'horaire anticipé de réception des signaux vocaux codés;
synchronisation desdites unités de base supplémentaires avec les signaux vocaux codés reçus grâce à un dispositif de synchronisation (12, 22, 23, S2) des signaux vocaux codés;
évaluation de la necessité ou non d'effectuer une opération de relais depuis la première unité de base vers l'une des unités de base supplémentaires, et le cas échéant, activation de l'opération de relais de la communication avec l'élément portable, le relais se faisant depuis la première unité de base vers l'une des unités de base supplémentaires sans entraîner d'interruption majeure du processus de transmission et de réception des signaux vocaux codés entre l'élément portable et les unités de base.

16. Une méthode de relais ainsi revendiquée à la revendication 15, dans laquel ledit signal d'horloge est une impulsion prédéterminée produite par un compteur de bits (19) raccordé à l'horloge externe commune.

17. Une méthode de relais ainsi revendiquée à la revendication 16, comprenant en outre une étape consistant à transmettre ladite impulsion prédéterminée à un second compteur de bits (24) pour pré-programmer ce second compteur de bits à l'aide de l'horaire anticipé de réception des signaux vocaux codés.

18. Une méthode de relais ainsi revendiquée à l'une quelconque des revendications 15 à 17, comportant en outre le réglage du chronométrage des unités de base supplémentaires pour améliorer leur synchronisation avec les signaux vocaux codés.

19. Une méthode de relais ainsi revendiquée à l'une quelconque des revendications 15 à 18, comportant en outre le décodage des signaux vocaux codés reçus.

20. Une méthode de relais ainsi revendiquée à la revendication 19, dans lequelle les signaux vocaux codés reçus sont décodés grâce à l'identification et à la séparation des signaux vocaux et des autres données des signaux vocaux codés.

21. Une méthode de relais ainsi revendiquée à l'une quelconque des revendications 15 à 19, comportant en outre l'évaluation de la qualité des signaux vocaux codés reçus.

22. Une méthode de relais ainsi revendiquée à l'une des revendications 19, 20 ou 21, dans laquelle l'évaluation de la qualité des signaux vocaux codés reçus est basée sur le succès ou sur l'échec de l'opération de décodage des données.

23. Une méthode de relais ainsi revendiquée à la revendication 22, dans laquelle la décision d'effectuer une opération de relais est basée sur la qualité des signaux vocaux codés reçus.

24. Une méthode de relais ainsi revendiquée à la revendication 23, dans laquelle l'opération de relais a lieu lorsque la qualité des signaux vocaux codés reçus par l'une des unités de base supplémentaires est meilleure que la qualité des signaux vocaux codés reçus par la première unité de de base.

25. Une méthode de relais ainsi revendiquée à l'une quelconque des revendications 15 à 23, comportant en outre la formation (ou apprentissage) d'une des unités de base aux signaux vocaux et autres données émis par l'unité portable après qu'une décision de relais a été prise mais avant que le relais n'ait lieu.
